# EUROPEAN PATENT SPECIFICATION

(11) **EP 1 273 178 B1**
(45) Date of publication and mention of the grant of the patent: **11.05.2011**
(21) Application number: 01914027.6
(22) Date of filing: 22.03.2001
(51) Int. Cl.: H04N 7/52

(54) **MULTIPLEXING COMPRESSED SIGNALS**
MULTIPLEXE VON KOMPRIMIERTEN SIGNALEN
MULTIPLEXAGE DE SIGNAUX COMPRIMES

(30) Priority: 07.04.2000 GB 0008648
(43) Date of publication of application: 08.01.2003
(73) Proprietor: Amstr. Investments 6K.G., LLC, Wilmington DE 19808 (US)
(72) Inventor: KNEE, Michael, James, Hants GU32 2EE (GB)
(74) Representative: Small, Gary James
(86) International application number: PCT/GB2001/001265
(87) International publication number: WO 2001/078407

(56) References cited:
- EP-A2- 0 743 796
- US-A- 5 506 844
- US-A- 5 861 919
- US-A- 5 933 451
- US-A- 6 038 256

## Description

This invention relates to compression of digital video and other signals and is especially concerned with the multiplexing of such compressed signals.

So-called statistical multiplexers, operate to allocate bit rate amongst the bit-streams of a multiplex so that the peak requirements of one bit-stream are accommodated at any one time by reduced requirements of one or more other bit-streams. Typically, a set of bit-stream encoders is connected through proprietary control links with a multiplexer. A control protocol is established which monitors the complexity of the picture material being handled by each encoder and varies the bit rate output by each encoder so that (within a fixed aggregate bit rate) encoders handling relatively more complex material have relatively higher bit rates.

As an example, reference is directed to US 5 861 919, which the channel bandwidth is allocated to the individual encoders in such a way that differences in a quality meaure amongst the decocers are reduced.

Within each encoder there is of course the constraint that the encoder buffer should never under or overflow. Efficient management of the bit rate of a single encoder is therefore in itself a difficult task. Managing the bitrates of multiple encoders within a statistical multiplex is more difficult still.

A typical encoder will have a bit rate control process which operates to vary a quantization parameter. There are a wide variety of such bit rate control techniques. For a particularly useful technique, reference is directed to PCT/GB00/00252 which describes how the current buffer occupancy is measured against a dynamically varying working range of occupancy values and the result used to vary the quantiser scale between coarser and finer values. Generally speaking, the more demanding the picture material, the coarser the quantization, for a given bit rate. Other rate control techniques may differ in the manner in which quantization is controlled, whilst sharing the characteristic that the more demanding is the picture material, the coarser will be the quantization.

It is suggested in WO 00/16559 that as a picture material becomes less demanding, the quantization should not be allowed to become finer and finer, but should be limited to the level beyond which there will be no discernible increase in picture quality to the viewer.

It is an object of certain aspects of the present invention to provide a simple method of multiplexing which does not demand sophisticated control links.

Accordingly, the present invention consists, in one aspect, in a method of multiplexing the output bit-streams from respective encoding means each of which having at least one quality parameter varying between higher and lower quality values in accordance with the nature of the material being encoded, comprising the steps of determining a measure of the relative quality levels of the respective encoding means and using the measure in selecting the encoding means from which data is to be read such that the output bitstreams from the respective encoding means are multiplexed without using a control process to adjust the respective bitrates of any of the encoding means.

Advantageously, data is read from the encoding means having the lowest quality level, the reduction in buffer occupancy of that encoding means ending to cause that encoding means to more towards a higher quality level.

The quality level assessed will typically be that relating to fineness or coarseness of the quantization level, but may also be the PSNR value, or other ranked measure.

It will be recognised that the present invention provides a very simple, yet highly efficient method of statistical multiplexing. There is no need, as in the prior art, for the encoders to be told which quantization to use, as the system simple takes whatever the encoders produce, and attempts to reduce the burden on the encoder which is working hardest. This method can therefore be used with any encoder or transcoder, as no instructional input protocol for the encoders is required. Of course, in alternative embodiments, the encoders/transcoders may be modified, or may be of a specific type, lending increased efficiency rather than flexibility.

The system also does not require any information as to the bit rates being handled by the encoders. Data is simply read from the encoder currently outputting the lowest quality material, typically observed as that having the coarsest quantization.

There has been proposed in PCT/GB99/03361 a method for controlling a set of encoding means whose outputs are to be multiplexed in a transport stream. In that method, a reference transport stream is constructed having null packets assigned respectively to the elementary streams which are to be multiplexed. The number of null packets assigned to a given elementary stream over a defined time interval, defines the bit rate allocation for that stream. This approach can be employed with particular advantage in the present invention.

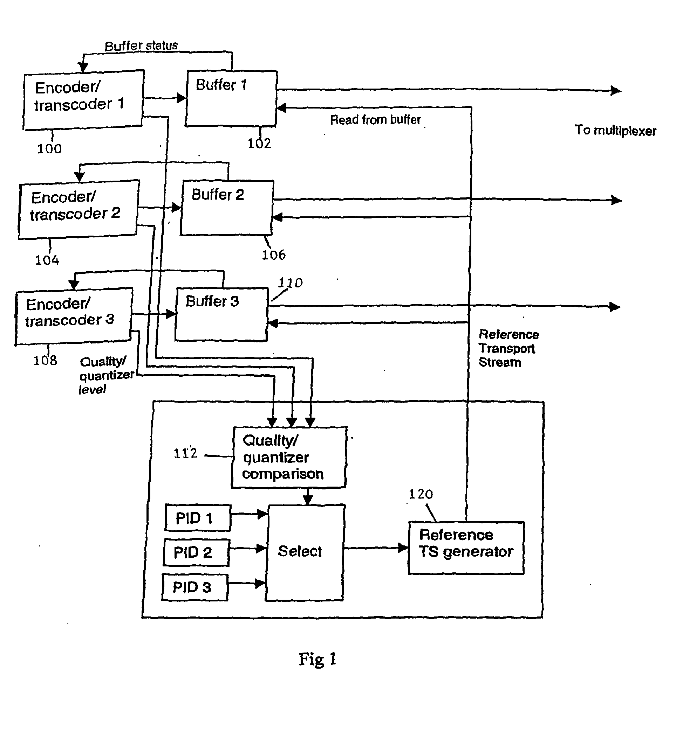

The invention will now be described by way of example with reference to the accompanying drawing which is a block diagram illustrating a multiplexing arrangement according to one embodiment of this invention.

The described arrangement is capable of multiplexing streams from a wide variety of sources. The inputs to the encoder or transcoder blocks shown in the drawing can thus include uncompressed or decoded video; MPEG feeds at different fixed or variable bit rates from unknown encoders; and local server outputs.

An encoder operating upon a decoded video signal will re-use upstream coding decisions where these are available, whether carried within the video signal or otherwise. (See, for example WO 95/35628 and WO 98/03017). A transcoder will use the same approach in that (regarding the transcoder as a cascaded decoder and encoder) upstream coding decisions inferred by the decoder will be re-used in the encoder.

Each transcoder/encoder (100, 104, 108) will have an output buffer (102, 106, 110) and will manage the occupancy of that buffer effectively through control of quantization. The current quantization level of each transcoder/encoder is taken to a quality/quantizer comparison unit (112). In a simple form, this unit identifies the transcoder/encoder having the coarsest quantization. In a more sophisticated arrangement the unit will derive from the quantization level and other parameters such as bit rate, an estimate of the PSNR of that transcoder/encoder. A technique for this purpose is disclosed in PCT/GB99/03356.

It will of course be possible to use other measures of the quality of the encoded or transcoded output or the demands placed on the coding process by the nature of the picture material. These will typically be related to quantization levels.

The quality/quantizer comparison unit (112) will then signal which transcoder/encoder has the coarsest quantization, lowest PSNR or other ranked measure. It is this transcoder/encoder which, according to the invention, should next supply or should preferentially supply bits to the multiplex. The determination of which encoding means is employing the coarsest quantization, can be made as frequently as once per packet, though equally it could be made on a picture-by-picture basis.

Control over the reading of the individual transcoder/encoder output buffers is in this example exercised by supplying a reference transport stream and requiring each transcoder/encoder to "fill" those packets in the reference transport stream which have the corresponding packet ID (PID). For more information, reference is directed to PCT/GB99/03361.

The determination made by the quality/quantiser comparison unit of which transcoder/encoder has the coarsest quantiser, worst PSNR or other ranked measure is then reflected in selecting which PID is attached to the next packet in the reference transport stream (RTS) generated at block 120. The RTS is then input to the buffers (102, 106, 110), which output data at the "request" of their respective PID occurring in the RTS. Thus when, for example, buffer 2 (106) is deemed by comparison unit 112 to have, for example, the coarsest quantizer, the PID for buffer 2 is input into the RTS, which is the "filled" by the buffer to produce the stream sent to the multiplexer.

Of course, the control may be integrated over a suitable time period with the frequency of packets having the respective PID's reflecting the respective rankings of the transcoder/encoders over that time period.

The described approach will in a very simple manner allocate the available bit rate amongst the competing inputs in a way which tends to equalise quality across the streams.

An advantage of the preferred use of a reference transport stream is that the output streams can be multiplexed very simply; effectively an addition is all that is required since use of a common reference has ensured that that there will be no time conflicts. A more conventional multiplex may be required if other services are to be incorporated at this point.

In an alternative embodiment, the measure of the quality or quantization may simply be made by analysis of the bitstreams exiting the encoders (or buffers). This approach may be particularly applicable where no information may be gleaned from the encoders or buffers themselves, for example if the system is being employed as an add-on or modification to an existing architecture.

It should be understood that this invention has been described by way of examples only and that numerous modifications are possible without departing from the scope of the invention. In particular, the use of a reference transport stream is not the only way by which can be arranged that information is generally read from the transcoder/encoder having the coarsest quantization. A simple alternative is to provide a read signal to that buffer which at any one time is associated with the encoder having the coarsest quantization. As the buffer is emptied, the internal rate control of the encoder will tend to select a finer quantization. A point will then be reached at which the encoder is no longer using the coarsest quantization, and another encoder will be selected for it buffer to be read from.

## Claims

1. A method of multiplexing the output bit-streams from respective encoding means each of which having at least one quality parameter varying between higher and lower quality values in accordance with the nature of the material being encoded, the method comprising:
determining a measure of the relative quality levels of the respective encoding means and
using the measure in selecting the encoding means from which data is to be read such that the output bit-streams from the respective encoding means are multiplexed without any of the encoding means being signalled to adjust their respective bitrates.

2. A method according to claim 1, wherein data is read from the encoding means having the lowest quality parameter, the reduction in buffer occupancy of that encoding means tending to cause that encoding means to move towards a higher quality level.

3. A method according to claim 1 or claim 2, wherein the quality parameter is the quantization level employed by the encoding means.

4. A method according to any of the above claims, wherein the measurement of the quality parameter is performed on the encoding means.

5. A method according to any of the claims 1 to 3, wherein the measurement of the quality parameter is performed on the output bit-streams.

6. A method according to any of the above claims, wherein selecting comprises:
using the measure in generating a reference transport stream having a sequence of transport packets, each packet having a packet ID corresponding to one of the respective encoding means; supplying the reference transport stream to a reference input of each encoding means; and inserting data into the output bit-stream from the encoding means currently receiving the transport packet and having the corresponding packet ID.

7. A method according to claim 6, wherein generating the reference transport stream further comprises generating a transport packet corresponding to the encoding means having the lowest quality parameter.

8. A device for multiplexing the bit-streams from encoders each of which comprises at least one quality parameter varying between higher and lower quality values, the device comprising:
a comparison unit configured to compare quality parameters of respective encoders; and
a selection unit configured to
select an encoder from which data is to be read based on the comparison of the quality parameters and
initiate reading of data from the selected encoder, such that the device multiplexes the bitstreams from the respective encoders without signaling any of the encoders to adjust their respective bitrates.

## Patentansprüche

1. Verfahren zum Multiplexen der ausgegebenen Bitströme von jeweiligen Kodiereinrichtungen, von denen jede mindestens einen Qualitätsparameter aufweist, der entsprechend der Art des Materials, das kodiert wird, zwischen höheren und niedrigeren Qualitätswerten variiert, wobei das Verfahren umfasst:
Bestimmen eines Maßes für die relativen Qualitätsstufen der jeweiligen Kodiereinrichtungen und
Verwenden des Maßes beim Auswählen der Kodiereinrichtung, von der Daten gelesen werden sollen, so dass die ausgegebenen Bitströme von der jeweiligen Kodiereinrichtung gemultiplext werden, ohne dass irgendeine der Kodiereinrichtungen signalisiert wird, deren jeweiligen Bitraten anzupassen.

2. Verfahren nach Anspruch 1, **dadurch gekennzeichnet, dass** Daten von der Kodiereinrichtung mit dem niedrigsten Qualitätsparameter gelesen werden, wobei die Reduzierung der Pufferbelegung der Kodiereinrichtung dazu neigt, zu verursachen, dass sich die Kodiereinrichtung in Richtung zu einer höheren Qualitätsstufe bewegt.

3. Verfahren nach Anspruch 1 oder Anspruch 2, **dadurch gekennzeichnet, dass** der Qualitätsparameter die von der Kodiereinrichtung benutzte Quantisierungsstufe ist.

4. Verfahren nach einem der vorangehenden Ansprüche, **dadurch gekennzeichnet, dass** die Messung des Qualitätsparameters an der Kodiereinrichtung vorgenommen wird.

5. Verfahren nach einem der Ansprüche 1 bis 3, **dadurch gekennzeichnet, dass** die Messung des Qualitätsparameters an den ausgegebenen Bitströmen durchgeführt wird.

6. Verfahren nach einem der vorangehenden Ansprüche, **dadurch gekennzeichnet, dass** Auswählen umfasst:
Verwenden des Maßes beim Erzeugen eines Referenztransportstroms mit einer Abfolge von Transportpaketen, wobei jedes Paket eine Paket-ID aufweist, die einer der jeweiligen Kodiereinrichtungen entspricht;
Liefern des Referenztransportstroms an einen Referenzeingang jeder Kodiereinrichtung;
und
Einfügen von Daten in den ausgegebenen Bitstrom von der Kodiereinrichtung, die gegenwärtig das Transportpaket empfängt und die entsprechende Paket-ID aufweist.

7. Verfahren nach Anspruch 6, **dadurch gekennzeichnet, dass** Erzeugen des Referenztransportstromes ferner Erzeugen eines Transportpakets umfasst, das der Kodiereinrichtung mit dem niedrigsten Qualitätsparameter entspricht.

8. Vorrichtung zum Multiplexen der Bitströme von Kodierern, von denen jeder mindestens einen Qualitätsparameter aufweist, der zwischen höheren und niedrigeren Qualitätswerten variiert, wobei die Vorrichtung umfasst:
eine Vergleichseinheit, die zum Vergleichen von Qualitätsparameters von jeweiligen Kodierern konfiguriert ist; und
eine Auswähleinheit, die konfiguriert ist, um
einen Kodierer, von dem Daten gelesen werden sollen, auf der Basis des Vergleichs der Qualitätsparameter auszuwählen und
Lesen von Daten von dem ausgewählten Kodierer zu initiieren, so dass die Vorrichtung die Bitströme von den jeweiligen Kodierern multiplext, ohne irgendeinem der Kodierer zu signalisieren, deren jeweiligen Bitraten anzupassen.

## Revendications

1. Procédé de multiplexage des trains de bits de sortie de moyens de codage respectifs dont chacun comporte au moins un paramètre de qualité variant entre des valeurs de qualité plus élevées et plus basses en accord avec la nature du matériau codé, le procédé comprenant:
déterminer une mesure des niveaux de qualité relatifs des moyens de codage respectifs et
utiliser la mesure pour sélectionner le moyen de codage duquel les données doivent être lues de sorte que les trains de bits de sortie des moyens de codage respectifs sont multiplexés sans que l'un quelconque des moyens de codage soit signalé pour ajuster leurs débits binaires respectifs.

2. Procédé selon la revendication 1, dans lequel les données sont lues du moyen de codage ayant le paramètre de qualité le plus bas, la réduction dans l'occupation tampon de ce moyen de codage tendant à amener ce moyen de codage à aller vers un niveau de qualité plus élevé.

3. Procédé selon la revendication 1 ou la revendication 2, dans lequel le paramètre de qualité est le niveau de quantification utilisé par le moyen de codage.

4. Procédé selon l'une quelconque des revendications précédentes, dans lequel la mesure du paramètre de qualité est exécutée sur le moyen de codage.

5. Procédé selon l'une quelconque des revendications 1 à 3, dans lequel la mesure du paramètre de qualité est exécuté sur les trains de bits de sortie.

6. Procédé selon l'une quelconque des revendications ci-dessus, où la sélection comprend:
utiliser la mesure en produisant un train de transport de référence ayant une séquence de paquets de transport, chaque paquet ayant un paquet ID correspondant à un des moyens de codage respectifs; amener le train de transport de référence à une entrée de référence de chaque moyen de codage; et insérer les données dans le train de bits de sortie du moyen de codage recevant actuellement le paquet de transport et ayant le paquet ID correspondant.

7. Procédé selon la revendication 6, dans lequel la génération du train de transport de référence comprend en outre la génération d'un paquet de transport correspondant au moyen de codage ayant le paramètre de qualité le plus bas.

8. Dispositif de multiplexage de train de bits de codeurs dont chacun comprend au moins un paramètre de qualité variant entre des valeurs de qualité plus élevées et plus basses, le dispositif comprenant:
une unité de comparaison configurée pour comparer des paramètres de qualité de codeurs respectifs; et
une unité de sélection configurée pour
sélectionner un codeur dont les données doivent être lues sur la base de la comparaison des paramètres de qualité et
initier la lecture de données du codeur sélectionné de sorte que le dispositif multiplexe les trains de bits des codeurs respectifs sans signaler l'un quelconque des codeurs pour ajuster leurs débits binaires respectifs.
